## Europäisches Patentamt
## European Patent Office
## Office européen des brevets

(19)

(11) Numéro de publication: **0 242 667
B1**

(12) **FASCICULE DE BREVET EUROPEEN**

(45) Date de publication du fascicule du brevet:
**18.10.89**

(51) Int. Cl.⁴: **B23K 3/02**

(21) Numéro de dépôt: **87104957.3**

(22) Date de dépôt: **03.04.87**

(54) **Outil de soudage pour dispositifs électroniques.**

(30) Priorité: **14.04.86 FR 8605424**

(43) Date de publication de la demande:
**28.10.87 Bulletin 87/44**

(45) Mention de la délivrance du brevet:
**18.10.89 Bulletin 89/42**

(84) Etats contractants désignés:
**CH DE GB IT LI**

(56) Documents cités:
**GB-A- 1 156 754
US-A- 3 582 610**

**PATENT ABSTRACTS OF JAPAN,
vol. 7, no. 193 (M-238)[1338], 24 août 1983**

(73) Titulaire: **Eta SA Fabriques d'Ebauches,
Schild-Rust-Strasse 17, CH-2540 Granges(CH)**

(72) Inventeur: **Stampfli, Jean-Marcel, Chantemerle 3,
CH-2525 Le Landeron(CH)**

(74) Mandataire: **Barbeaux, Bernard et al, ICB Ingénieurs
Conseils en Brevets SA Passage Max. Meuron 6,
CH-2001 Neuchâtel(CH)**

ACTORUM AG

## Description

La présente invention concerne les outils de soudage pour dispositifs électroniques et plus particulièrement ceux qui servent à souder simultanément un ensemble de pattes de connexion sur les bornes de connexion d'une microplaquette de circuits intégrés communément appelée puce.

Pour pouvoir accélérer et rendre plus économique le montage automatique de puces de circuits intégrés sur des supports, par exemple des circuits imprimés ou des fonds de boîtiers, on a mis au point une technique connue sous l'abréviation T.A.B. de l'expression anglaise "Tape Automated Bonding".

Selon cette technique, on commence par monter les puces sur un ruban souple en matière isolante qui présente des perforations le long de ses bords pour pouvoir être entraîné comme un film cinématographique et des groupes de fenêtres régulièrement répartis dans sa partie centrale qui comprennent chacun une fenêtre principale et des fenêtres secondaires, souvent au nombre de quatre, disposées autour de celle-ci.

Ce ruban porte par ailleurs sur l'une de ses faces et pour chaque groupe de fenêtres un ensemble de bandes conductrices qui passent au-dessus des fenêtres secondaires ou tout au moins d'un certain nombre de celles-ci et qui se prolongent au-delà du bord de la fenêtre principale pour former des pattes de connexion rayonnantes dont la configuration correspond à celle des bornes de connexion des puces. Pour fixer les puces sur le ruban on place chacune d'elles sous la fenêtre principale d'un groupe de façon que ses bornes de connexion se trouvent au droit des extrémités libres des pattes de connexion associées à cette fenêtre et on soude en même temps toutes ces extrémités, préalablement revêtues d'une matière fusible telle que l'étain sur lesdites bornes.

Ensuite, on recouvre au moins la face avant des puces, c'est-à-dire celle où se trouvent les bornes de connexion, d'une couche de matériau adhésif durcissable, électriquement isolant et opaque, de façon que les soudures que l'on vient de réaliser y soient noyées et on teste ces soudures. On peut aussi procéder à ce moment là à des essais de fonctionnement des circuits intégrés.

Ces essais terminés on découpe le ruban autour de chaque puce selon un contour qui suit les côtés des fenêtres secondaires les plus éloignés de la fenêtre centrale pour obtenir des modules avec des pattes de connexion externes formées par les parties des bandes conductrices qui se trouvaient à l'origine au-dessus de ces fenêtres secondaires.

Après cela il ne reste plus qu'à fixer chaque module sur le support qui lui est destiné, ce qui se fait en soudant, là encore en une seule fois, ses pattes externes, revêtues d'un matériau de soudure approprié, sur des conducteurs correspondants de ce support.

Pour procéder à cette seconde opération de soudage appelée souvent O.L.B., abréviation du terme anglais "Outer Lead Bonding", on utilise généralement un outil qui comprend au moins un organe chauffant ou thermode monté aux extrémités de colonnes en matériau conducteur et isolées électriquement entre elles qui le relient à un générateur de courant.

Après avoir positionné le module avec la puce pour que les extrémités de ses pattes de connexion externes se trouvent au-dessus des conducteurs du support on abaisse l'outil de soudage de façon à maintenir par pression les premières en contact avec les seconds et on alimente la thermode, ou chaque thermode s'il y en a plusieurs, par un courant de forte intensité qui provoque la fusion du matériau de soudure. Puis, très rapidement, on coupe l'alimentation de la thermode ou des thermodes, ce qui permet au matériau de soudure de se solidifier à nouveau, et on relève l'outil de soudage.

Naturellement, pour permettre de réaliser des soudages de ce genre à une cadence élevée et de manière très fiable les thermodes utilisées doivent répondre à un certain nombre d'exigences.

Tout d'abord, pour autoriser des cycles de chauffage à la fois très rapides et très précis, elles doivent être fabriquées en un matériau à faibles résistivité et inertie thermiques.

Pour la même raison elles doivent avoir une structure relativement fine, ce qui peut être obtenu par exemple en les réalisant par découpage d'une tôle ou d'une bande métallique et, si il n'y en a qu'une par outil, par pliage et éventuellement emboutissage.

D'autre part, pour assurer un soudage correct de toutes les pattes de connexion sur les conducteurs du support, il faut à la fois que la répartition de la température au niveau de leur semelle, c'est-à-dire de la partie plane qui est amenée au contact des pattes, soit parfaitement uniforme et que le matériau dont elles sont constituées leur permette de présenter une bonne résistance mécanique et une surface de contact de dureté suffisante pour que la pression exercée sur ces pattes soit toujours, elle aussi, la plus uniforme possible.

Comme matériaux qui conviennent très bien pour ce type de thermodes et qui sont couramment utilisés on peut citer le titane, certains aciers au chrome et l'alliage connu sous la marque "Inconel" qui est à base de nickel et qui contient également du chrome et du fer.

Pour la première opération de soudage, c'est-à-dire celle qui permet de monter les puces sur le ruban et que l'on appelle I.L.B. ("Inner Lead Bonding") ont fait plutôt appel à des outils d'une autre catégorie, dont l'organe chauffant n'est plus chauffé par intermittence par des impulsions de courant qui le traversent mais de façon continue et sans être relié lui-même à une source d'électricité. Il est alors constitué par une pièce massive fixée à l'extrémité d'un manche, qui présente, d'une part, une semelle généralement rectangulaire dont les dimensions sont adaptées à celles des puces et, d'autre part, un trou pour le logement d'un élément de chauffage, constitué par une résistance, et au moins un autre trou destiné à recevoir un thermocouple qui permet de contrôler la température à laquelle il est porté en agissant sur le générateur de courant qui alimente la résistance.

Dans ce cas, le matériau ou les matériaux qui composent l'organe chauffant, que l'on continue à appeler thermode, doivent être bons conducteurs de la chaleur et lui permettre de présenter une grande inertie thermique. Par ailleurs le semelle doit être très dure et, évidemment, parfaitement plane.

Les outils de soudage que l'on utilise actuellement le plus souvent et qui remplissent le mieux ces conditions sont ceux dont la thermode est formée d'un corps en Inconel, alliage dont on a déjà parlé et qui se comporte très bien dans le domaine des températures qui conviennent pour l'I.L.B., c'est-à-dire entre 450 et 600°C, et d'une semelle en diamant fixée sur ce corps. Ces outils sont très fiables mais, à cause du diamant, leur prix de revient est élevé et il est exclu de les employer pour la connexion de puces de grandes dimensions qui, en gros, sont celles dont la surface dépasse 30 mm². Or, ces puces sont de plus en plus courantes étant donné que l'on intègre des circuits de plus en plus compliqués, avec des bornes d'entrée et de sortie de plus en plus nombreuses.

A côté de ces outils de soudage à semelle en diamant il y a ceux dont la thermode est réalisée entièrement en céramique et, plus précisément, en oxyde de béryllium (BeO). Ils ont l'avantage de revenir beaucoup moins cher que les précédents et de convenir pour des puces de n'importe quelle grandeur mais ils sont nettement moins fiables et du point de vue dureté ils ne dépassent pas 2000 Vickers alors que celle du diamant est d'environ 3000 Vickers. De plus, la poussière d'oxyde de béryllium produite au moment de l'usinage de la thermode est toxique et la fixation de cette dernière au bout d'un manche est compliquée et pose souvent des problèmes.

L'invention a pour but de fournir un outil de soudage destiné lui aussi plus spécialement à l'I.L.B., qui soit à la fois très satisfaisant en ce qui concerne sa dureté au niveau de sa surface de contact, très fiable et peu coûteux.

Un autre but de l'invention est de fournir un outil composé d'éléments faciles à réaliser et à assembler et qui ne présente pas de danger pour les personnes chargées de le fabriquer.

Enfin, l'invention vise également à ce que cet outil puisse convenir pour des puces de n'importe quelle grandeur.

Ces buts sont atteints grâce au fait que, dans un outil de soudage selon l'invention qui comporte lui aussi une manche et un organe chauffant massif avec une partie plane destinée à être appliquée sur des pattes de connexion à souder et un logement pour un dispositif de chauffage, cet organe chauffant comprend un corps en tungstène et une couche de nitrure de titane qui recouvre ce corps au moins à l'endroit de ladite partie plane.

En fait, pour des raisons que l'on indiquera par la suite, il est préférable que la couche de nitrure de titane recouvre tout le corps sauf du côté où il est fixé au manche.

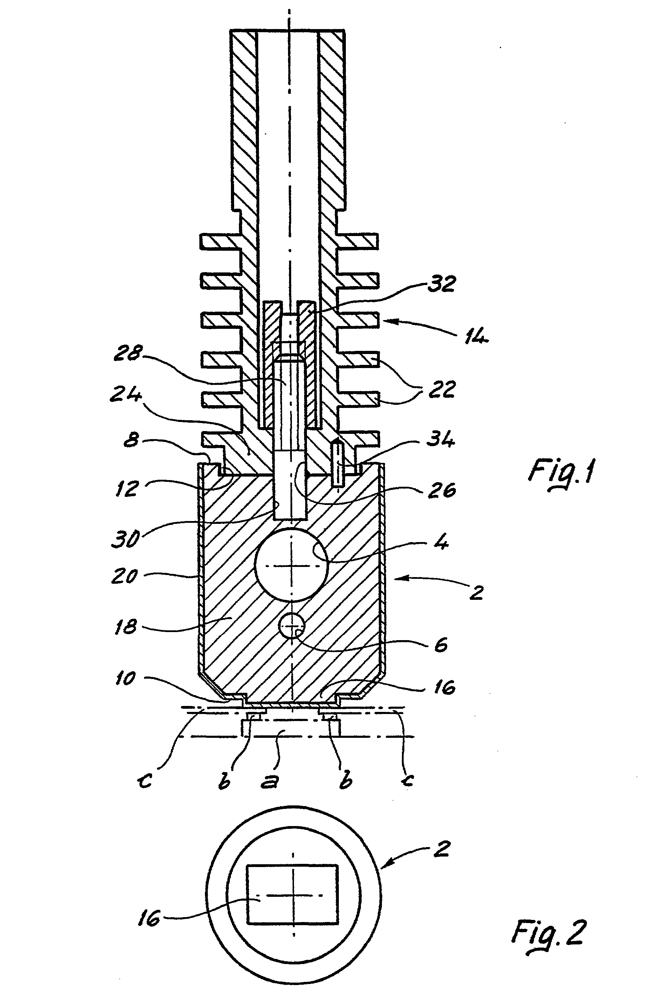

D'autres caractéristiques et avantages de l'invention apparaîtront à la lecture de la description qui suit d'une forme préférée d'exécution, description qui se réfère au dessin annexé sur lequel les figures 1 et 2 sont des vues, respectivement, en coupe axiale et de dessous de l'outil de soudage selon l'invention, sous cette forme d'exécution.

L'outil de soudage qui est montré par ces figures comprend une thermode 2, de forme essentiellement cylindrique, percée à peu près à mi-hauteur d'un trou diamétral 4 pour le logement d'une résistance de chauffage non représentée et, plus bas, d'un autre trou diamétral 6, plus petit, destiné à recevoir un thermocouple qui n'a pas lui non plus été représenté.

D'autre part, les faces supérieure 8 et inférieure 10 de cette thermode présentent respectivement un trou central 12, relativement grand et peu profond, dans lequel pénètre l'extrémité inférieure d'un manche 14 et un bossage rectangulaire 16 (voir figure 2), de hauteur constante, qui constitue évidemment la partie plane, la semelle, qui viendra appuyer sur les extrémités des pattes de connexion à souder.

Pour illustrer cela on a également représenté en pointillés sur la figure 1, une puce a avec deux de ses bornes b et les deux pattes de connexion c auxquelles ces dernières seront fixées.

Conformément à l'invention la thermode 2 est constituée par un corps en tungstène 18 qui détermine sa forme et par une couche de nitrure de titane (TiN) 20 qui recouvre entièrement ce corps sauf du côté du manche 14.

Cette couche 20 dont l'épaisseur est de préférence comprise entre 1 et 4 µm a deux rôles:

Premièrement, elle permet à la semelle 16 d'avoir une dureté d'environ 2300 Vickers alors qu'autrement cette dureté serait seulement celle du tungstène, c'est-à-dire à peu près 400 Vickers. Il est bien clair qu'avec une telle valeur on serait loin de la dureté du diamant et même de celle de l'oxyde de béryllium. Par contre avec 2300 Vickers on se situe entre les deux.

Deuxièmement, elle protège le corps 18 contre l'oxydation. En effet, si le tungstène permet à la thermode de bien remplir les conditions de conductibilité et d'inertie thermiques dont on a parlé, il a l'inconvénient de s'oxyder et ceci d'autant plus rapidement que la température augmente. Par conséquent, sans le nitrure de titane la semelle 16 ne resterait pas longtemps plane et propre.

La meilleure façon de procéder pour former la couche 20 est de commencer par nettoyer très soigneusement le corps 18, par exemple en le plaçant dans un bac à ultre-sons, et d'utiliser ensuite la technique maintenant très répandue du dépôt physique en phase vapeur généralement désignée par l'abréviation P.V.D. du terme anglais "Physical Vapor Deposition".

Cette technique peut être mise en oeuvre de différentes manières. L'une d'elles consiste à introduire la pièce à traiter dans une enceinte contenant une cible de titane et à créer dans cette enceinte un vide poussé par pompage pour pouvoir ensuite soumettre la pièce à un décapage ionique à haute tension. Lorsque cette phase de décapage est terminée, on introduit dans l'enceinte de l'argon et du gaz ammoniac (NH₃) et on crée au moyen d'un champ électromagnétique de très haute fréquence une décharge électroluminescente qui ionise l'argon et qui donne ainsi naissance à un plasma. Ce plasma arrache alors à la cible des particules de titane qui réagissent avec le gaz ammoniac et vont se déposer sous forme de nitrure de titane sur la pièce à recouvrir pour y former une couche superficielle dont l'épaisseur dépend de la durée de l'opération.

En procédant ainsi on peut obtenir une très bonne adhérence de la couche de TiN sur le corps en tungstène. Cela serait moins vrai si l'on faisait appel à d'autres techniques de dépôt qui ne sont malgré tout pas à exclure et notamment à celle du dépôt chimique en phase vapeur ou C.V.D. ("Chemical Vapor Deposition").

Naturellement, comme on l'a déjà laissé entendre, on pourrait se contenter d'une couche de TiN qui ne recouvrirait le corps de thermode 18 qu'à l'endroit du bossage 16 ou que la face avant de ce corps mais l'opération de dépôt serait plus compliquée car il faudrait masquer au moins toute la surface latérale du corps et l'outil serait moins beau à voir.

En ce qui concerne le manche 14, on voit sur la figure 1 que celui-ci est formé par un tube métallique dont la partie inférieure présente un certain nombre d'ailettes de refroidissement 22 en forme de couronnes et qui a du côté de la thermode un fond 24 percé d'un trou 26.

Ce trou 26 permet à une vis sans tête 28 dont une partie non filetée est logée à l'intérieur d'un trou borgne 30 situé au fond et au centre du trou 12 de la termode déjà mentionné et qui a été soudée à cette dernière par brasage ou mieux en utilisant un faisceau laser de pénétrer à l'intérieur du manche et de coopérer avec un écrou 32 pour assurer la fixation de ce manche sur la thermode.

Pour éviter d'avoir des problèmes au moment du chauffage de la thermode il est important que le manche 14, la vis 28 et l'écrou 32 soient réalisés dans des matériaux dont les coefficients de dilatation sont très proches ou, de préférence, dans le même. Ce matériau peut être avantageusement l'Inconel mais il peut s'agir aussi, par exemple, de nickel ou d'un acier inoxydable.

D'autre part, lorsque le coefficient de dilatation du matériau qui compose le manche est nettement supérieur à celui du tungstène, ce qui est le cas pour l'Inconel puisqu'il y a à peu près un facteur cinq entre les deux, il est nécessaire que le diamètre de l'extrémité inférieure de ce manche soit un peu plus petit que celui du trou 12 dans lequel elle se trouve, comme le montre la figure 1.

Enfin, cette figure montre également l'existence d'une goupille d'indexation 34 qui pénètre à la fois dans la thermode et dans le fond 24 du manche et qui sert à positionner ces deux pièces l'une par rapport à l'autre. Grâce à cela on est sûr que lorsque l'outil sera placé de façon précise sur une machine destinée à le recevoir, grâce à des moyens non visibles sur le dessin, la semelle 16 occupera une position correcte par rapport aux puces et aux pattes de connexion qui défileront devant elle.

Bien entendu, l'invention n'est pas limitée au mode d'exécution que l'on vient de décrire.

En particulier on pourrait très bien imaginer de réaliser un outil conforme à l'invention destiné à autre chose que l'I.L.B., par exemple au soudage des pattes externes d'un boîtier plat contenant une ou plusieurs puces sur des conducteurs portés par un support. Il suffirait pour cela de donner à la thermode les dimensions voulues, notamment en ce qui concerne la semelle, et de prévoir dans celle-ci une cavité dans laquelle le boîtier en question pourrait venir se loger au moment du soudage. Dans ce cas la semelle ne serait évidemment pas pleine mais constituée par exemple par une partie plane de la thermode comprise entre deux rectangles semblables dont les diagonales seraient confondues.

**Revendications**

1. Outil de soudage pour dispositifs électroniques destiné notamment au soudage simultané d'un ensemble de pattes de connexion sur les bornes de connexion d'une microplaquette de circuits intégrés et comportant un organe chauffant (2) placé à l'extrémité d'un manche (14) et présentant un logement (4) pour recevoir un dispositif destiné à son chauffage et une partie plane (16) prévue pour être appliquée sur lesdites pattes de connexion, caractérisé par le fait que ledit organe chauffant comprend un corps (18) en tungstène et une couche de nitrure de titane (20) qui recouvre ce corps au moins à l'endroit de ladite partie plane.

2. Outil de soudage selon la revendication 1, caractérisé par le fait que ladite couche (20) recouvre entièrement ledit corps (18) sauf sur une face (8) située du côté du manche (14).

3. Outil de soudage selon la revendication 1 ou 2, caractérisé par le fait que ladite couche a une épaisseur comprise entre 1 et 4 µm.

4. Outil de soudage selon l'une quelconque des revendications 1 à 3, caractérisé par le fait que le manche (14) comprend un tube métallique qui présente un fond (24) percé d'un trou (26) et qui est fixé à l'organe chauffant (2) par une vis (28) solidaire de ce dernier, qui passe dans ledit trou et qui coopère avec un écrou (32) placé à l'intérieur dudit tube.

5. Outil de soudage selon la revendication 4, caractérisé par le fait que le tube (14), la vis (28) et l'écrou (32) sont réalisés dans le même matériau.

6. Outil de soudage selon la revendication 5, caractérisé par le fait que ledit matériau est un alliage de nickel, de chrome et de fer.

7. Outil de soudage selon l'une quelconque des revendications 4 à 6, caractérisé par le fait que ledit tube (14) présente des ailettes de refroidissement (22).

**Patentansprüche**

1. Lötwerkzeug für elektronische Bauteile, insbesondere bestimmt für simultanes Löten einer Gruppe von Anschlußfahnen an die Anschlußkissen eines integrierten Schaltkreischips, und umfassend ein am Ende einer Hülse (14) angeordnetes Heizorgan (2), das eine Ausnehmung (4) zur Aufnahme einer Heizvorrichtung sowie eine ebene Partie (16) aufweist, bestimmt zum Einwirken auf die Anschlußfahnen, dadurch gekennzeichnet, daß das Heizorgan einen Wolframkörper (18) und eine Schicht von Titannitrid (20) umfaßt, die den Körper mindestens am Ort der genannten ebenen Partie abdeckt.

2. Lötwerkzeug nach Anspruch 1, dadurch gekennzeichnet, daß die Schicht (20) den Körper (18) vollständig bedeckt mit Ausnahme einer der Hülse (14) zugekehrten Seite (8).

3. Lötwerkzeug nach Anspruch 1 oder 2, dadurch gekennzeichnet, daß die Schicht eine Dicke zwischen 1 und 4 µm hat.

4. Lötwerkzeug nach einem der Ansprüche 1 bis 3, dadurch gekennzeichnet, daß die Hülse (14) ein Metallrohr mit einem von einem Loch (26) durchsetzten Boden (24) umfaßt, das an dem Heizorgan (2) mittels einer mit dem letzteren verbundenen Schraube (28) befestigt ist, die in das Loch ragt und mit einer im Innern der Metallrohrs angeordneten Muter (32) zusammenwirkt.

5. Lötwerkzeug nach Anspruch 4, dadurch gekennzeichnet, daß das Rohr (14), die Schraube (28) und die Mutter (32) aus demselben Material bestehen.

6. Lötwerkzeug nach Anspruch 5, dadurch gekennzeichnet, daß das Material eine Legierung von Nickel, Chrom und Eisen ist.

7. Lötwerkzeug nach einem der Ansprüche 4 bis 6, dadurch gekennzeichnet, daß das Rohr (14) Kühlrippen (22) aufweist.

## Claims

1. A soldering tool for electronic devices intended especially for simultaneously soldering an array of connector lugs to connector pads of a chip, comprising a heating member (2) situated at the end of a holding member (14) and having a housing (4) for receiving means for heating it and a planar part (16) adapted to be applied against said connector lugs, characterised by the fact that said heating member comprises a body (18) of tungsten and a layer of titanium nitride (10) which covers at least said planar part of this body.

2. A soldering tool according to claim 1, characterized by the fact that said layer (20) entirely covers said body (18) except over a face (8) adjacent the holding member (14).

3. A soldering tool according to claim 1 or 2, characterized by the fact that the thickness of said layer is comprised between 1 and 4 micrometer.

4. A soldering tool according to any one of claims 1 to 3, characterized by the fact that the holding member (14) comprises a metal tube having an inner end (24) in which there is a hole (26) and which is fixed to the heating member (2) by a screw (28) fastened to the heating member, which screw passes through said hole and cooperates with a nut (32) situated inside said tube.

5. A soldering tool according to claim 4, characterized by the fact that the tube (14), the screw (28) and the nut (32) are made of the same material.

6. A soldering tool according to claim 5, characterized by the fact that said material is an alloy of nickel, chromium and iron.

7. A soldering tool according to any one of claims 4 to 6, characterized by the fact that said tube (14) has cooling fins (22).

EP 0 242 667 B1

*Fig.1*

*Fig.2*